# EUROPEAN PATENT APPLICATION

(11) **EP 2 544 378 A2**
(43) Date of publication of application: **09.01.2013**
(21) Application number: 11009682.3
(22) Date of filing: 08.12.2011
(51) Int. Cl.: H04B 1/40

(54) **Method and system for 60 GHz chipset RF control interface (RF module control interface)**

(30) Priority: 08.12.2010 US 42102710 P
(71) Applicant: Broadcom Corporation, Irvine, CA 92617 (US)
(72) Inventor: Ibrahim, Brima, 92653 Laguna Hills CA (US); Trachewsky, Jason, A., Irvine, CA 92617 (CA); Carbone, Nicholas, 92130 San Diego CA (US); Nicolson, Sean, 92618 Irvine CA (US); Kimura, Koji, 92128 San Diego (CA)
(74) Representative: Jehle, Volker Armin

(57) **Abstract**

Disclosed are various embodiments for an extremely high frequency transceiver employing a baseband module and a radio-frequency module. The baseband module and the radio-frequency module are connected by a coaxial cable. The coaxial cable carries a multiplexed signal that may include a direct current component, a clock reference, a control signal, and an intermediate frequency signal. The control signal encodes one or more commands for controlling the operation of the radio-frequency module. Multiple radio-frequency modules may be employed in some embodiments.

## Description

### BACKGROUND

60 gigahertz (GHz) communication technology provides communication over very short distances. It is ideal for many short range high bandwidth communication applications such as in-home high definition (HD) video and high volume/capacity information storage. 60 GHz communication enables fast wireless peer-to-peer connectivity and device connectivity. It may also serve as an alternative or replacement for High Definition Multimedia Interface (HDMI) cables.

### SUMMARY OF THE INVENTION

According to an aspect of the invention, a transceiver is provided, comprising:
a baseband module configured to transmit a data signal;
a radio-frequency module configured to transmit the data signal at an extremely high frequency; and
wherein the baseband module is coupled to the radio-frequency module by way of a coaxial cable, the baseband module is configured to transmit a multiplexed signal to the radio-frequency module through the coaxial cable, and the multiplexed signal includes a control signal modulated onto a control carrier frequency and the data signal modulated onto an intermediate frequency.
Advantageously, the radio-frequency module is further configured to:
receive another data signal at the extremely high frequency;
downconvert the other data signal to the intermediate frequency; and
transmit the other data signal at the intermediate frequency to the baseband module through the coaxial cable.
Advantageously, the baseband module and the radio frequency module each correspond to separate integrated circuits.
Advantageously, the extremely high frequency corresponds to 60 gigahertz.
Advantageously, the transceiver includes a plurality of the radio-frequency modules, and the control signal encodes a command to select at least one of the radio-frequency modules.
Advantageously, the radio-frequency modules are configured to tap off of the coaxial cable.
Advantageously, a first one of the radio-frequency modules is coupled to the baseband module by way of the coaxial cable, a second one of the radio-frequency modules is coupled to the first one of the radio-frequency modules by way of another coaxial cable, and the first one of the radio-frequency modules is configured to couple the coaxial cable to the other coaxial cable.
Advantageously, the radio-frequency module includes an antenna array having at least one antenna.
Advantageously, the antenna array includes a plurality of antennas, and the control signal encodes a command to select at least one of the antennas.
Advantageously, the baseband module and the radio-frequency module are unconnected other than by way of the coaxial cable.
Advantageously, the multiplexed signal includes a direct current component, and the radio-frequency module is powered by the direct current component.
Advantageously, the multiplexed signal includes a clock reference signal at a clock frequency, and the radio-frequency module is configured to use the clock reference signal to demodulate the control signal.
Advantageously, the control carrier frequency is derived from the clock frequency.
Advantageously, the intermediate frequency is derived from the clock frequency.
According to a further aspect, a receiver comprises:
means for receiving a data signal at an extremely high frequency, the means for receiving further comprising:
   means for downconverting the data signal to an intermediate frequency; and
   means for transmitting the data signal through a coaxial cable at the intermediate frequency;
means for controlling the means for receiving by way of a control signal multiplexed through the coaxial cable at a control carrier frequency; and
means for decoding the data signal at the intermediate frequency to a baseband signal.
Advantageously, the means for receiving the data signal includes a plurality of integrated circuits, each including a respective antenna array, and the means for controlling is further configured to select one of the integrated circuits.
Advantageously, the means for controlling further comprises means for generating a clock reference at a clock reference frequency on the coaxial cable, the means for receiving further comprises means for demodulating the control signal based at least in part on the clock reference signal, and the intermediate frequency and the control signal are derived from the clock reference frequency.
Advantageously, the means for controlling is configured to encode a command in the control signal for adjusting an automatic gain control setting in the means for receiving.
Advantageously, the means for receiving further comprises means for adjusting the automatic gain control setting based at least in part on an autonomous finite state machine triggered by the control signal over the coaxial cable.
According to a further aspect, a method is provided, comprising the steps of:
obtaining a baseband data signal in a baseband module;
generating a multiplexed signal in the baseband module, the multiplexed signal including a clock reference signal, a control signal, and an intermediate frequency data signal, the intermediate frequency data signal being generated from the baseband data signal;
transmitting the multiplexed signal to at least one radio-frequency module through a shielded coaxial cable;
decoding the control signal in the at least one radio-frequency module to recover at least one command to control the operation of the at least one radio-frequency module;
upconverting the intermediate frequency data signal to an extremely high frequency data signal in the at least one radio-frequency module; and
wirelessly transmitting the extremely high frequency data signal through an antenna array collocated in the at least one radio-frequency module.

### BRIEF DESCRIPTION OF THE DRAWINGS

Many aspects of the present disclosure can be better understood with reference to the following drawings. The components in the drawings are not necessarily to scale, emphasis instead being placed upon clearly illustrating the principles of the disclosure. Moreover, in the drawings, like reference numerals designate corresponding parts throughout the several views.

FIGS. 1, 2A, and 2B are diagrams of transceivers according to various embodiments of the present disclosure.

FIG. 3 is a diagram illustrating one example of a multiplexed signal present on an interface connecting a baseband module and one or more radio-frequency (RF) modules of the transceiver according to one embodiment.

FIG. 4 is block diagram illustrating components of a baseband module and an RF module of the used in modulating and demodulating a control signal of the multiplexed signal in a transceiver according to one embodiment.

FIG. 5 is a diagram of one example of a packet format employed for control data traffic in a transceiver according to one embodiment.

FIG. 6 is a diagram of one example of a streaming format that may be employed for automatic gain control (AGC) data traffic in a transceiver according to one embodiment.

FIG. 7 is a diagram of one example configuration of an antenna configuration look-up table employed to configure an antenna array of an RF module in a transceiver according to one embodiment.

FIG. 8 is a diagram of one example of a beam refinement packet format that may be employed during a beam refinement operation in a transceiver according to one embodiment.

FIG. 9 is a diagram of one example of a general packet format that may be employed in a transceiver according to one embodiment.

FIG. 10 is a flowchart illustrating one example of operation of a portion of a transceiver according to various embodiments.

### DETAILED DESCRIPTION

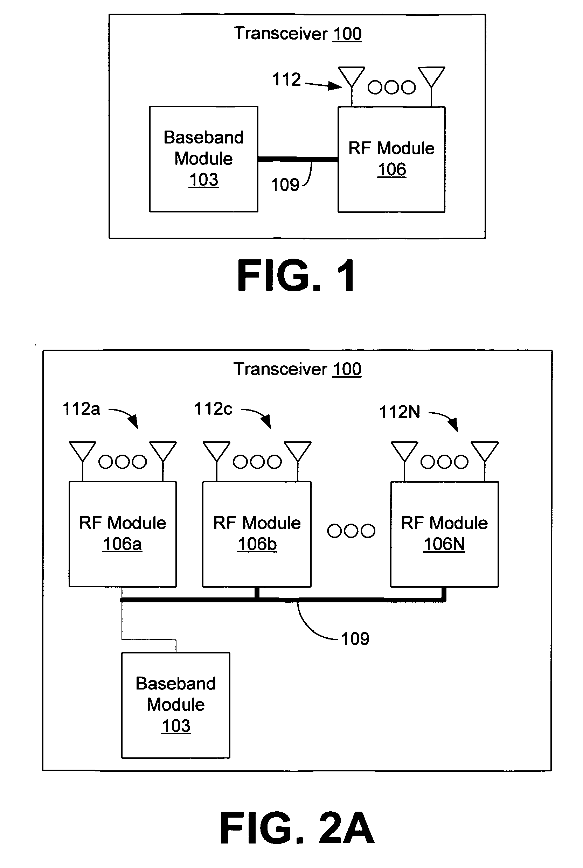

With reference to FIG. 1, shown is a transceiver 100 according to one embodiment. The transceiver 100, which implements a split architecture interface, includes a baseband module 103 and a radio-frequency (RF) module 106 coupled by way of an interface 109. The RF module 106 is coupled to an antenna array 112 including one or more antennas for transmitting and/or receiving an extremely high frequency RF signal such as, for example, a 60 GHz RF signal, a 77 GHz RF signal, 96 GHz RF signal, and/or other extremely high frequency signals that necessitate colocation of the RF module 106 with the antenna array 112. The interface 109 may correspond, for example, to a single, shielded coaxial cable interface used to transfer the intermediate frequency (IF) signal, a clock reference, as well as control signals from the baseband module 103 for controlling the operation of the RF module 106. Although described as a transceiver, it is understood that the transceiver 100 may be used exclusively for receiving or transmitting in some embodiments.

The antenna array 112 is co-located with the RF module 106 due to the characteristics of the extremely high frequency RF signal being transmitted and/or received. Line loss at frequencies of 60 GHz and upwards may be severe, which motivates placing the antenna array 112 as close to the RF module 106 as practical. To this end, the antenna array 112 may be integrated or collocated with the RF module 106. The RF module 106, in turn, downconverts the extremely high frequency RF signal to an IF signal that may be transmitted over a shielded coaxial cable. Similarly, in a transmit mode, the RF module 106 may upconvert an IF signal received over the shielded coaxial cable to the extremely high frequency signal for transmission. In one embodiment, the RF module 106 and the baseband module 103 may each be implemented with respective integrated circuit chips in a transceiver device.

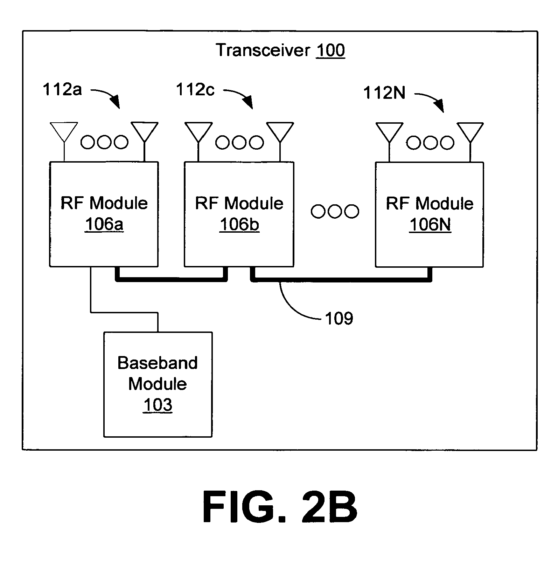

Turning now to FIGS. 2A and 2B, shown is a transceiver 100 according to other embodiments. In FIGS. 2A and 2B, the transceiver 100 includes one baseband module 103 and a plurality of RF modules 106a, 106b ... 106N coupled by way of an interface 109. Each of the RF modules 106 may be coupled to a respective one of a plurality of antenna arrays 112a, 112b ... 112N, which each includes one or more antennas for transmitting and/or receiving an extremely high frequency (EHF) RF signal. The plurality of RF modules 106 may be connected to the single baseband module 103, for example, through a tap-off arrangement from a single cable segment as shown in FIG. 2A or through a daisy-chain arrangement with multiple cable segments as shown in FIG. 2B.

Multiple RF modules 106 may be employed due to the propagation characteristics of EHF signals. Compared with other RF signals, EHF signals are less likely to propagate through various materials and reception depends more on a clear line of sight. If only one RF module 106 with an antenna array 112 were used, it may be in a position that is obscured by an attenuating material. Accordingly, multiple RF modules 106 may be utilized in different locations for antenna diversity. Which one, or ones, of the RF modules 106 is used may depend, for example, on the location of the far end transceiver 100 with which communication is desired.

In one exemplary embodiment, the transceiver 100 may correspond to a laptop with an aluminum chassis. A first RF module 106 may be located on one side of the laptop screen, and a second RF module 106 may be located on the other side of the laptop screen. When a far-end transceiver is located behind the screen, one of the RF modules 106 that is located at the back of the screen may be used. By contrast, when a far-end transceiver is located in front of the screen, the other one of the RF modules 106 that is located at the front of the screen may be used.

It may be the case that only one of the RF modules 106 may be active (i.e., able to receive or transmit) at any particular time. Thus, when one of the RF modules 106 is active, the other RF modules 106 may be placed in a standby state. When in the standby state, an RF module 106 may be configured only to receive commands over the interface 109. Further, when in the standby state, the RF module 106 may be configured to present sufficiently high impedance to the interface 109 in the 8 GHz region so that a minimum amount of the IF signal is lost. Selection of a particular one of the RF modules 106 may be supported. In some embodiments, multiple RF modules 106 may be active simultaneously.

Various design parameters will next be discussed. Speed and timing accuracy of the RF signaling interface between the baseband module 103 and the RF module 106 may be configured to minimize excess time of the RF module 106 in an active mode. It is desired that the excess time in the active mode is only a small fraction of the overall power consumption of the transceiver 100.

The baseband module 103 is able to write to control and configuration registers of the RF module 106. In cases where certain registers have different values for various modes of operation, a register banking structure may be in place in the RF module 106 so that multiple registers are not written during mode transition periods.

The control of the RF module 106 is configured such that various turnaround times are met. The turnaround times may be based on different interframe spacing (IFS) types such as, for example, short interframe spacing (SIFS), reduced interframe spacing (RIFS), arbitration interframe spacing (AIFS), distributed coordination function (DCF) interframe spacing (DIFS), and/or others. In one embodiment, the turnaround times associated with the WiGig specification are met.

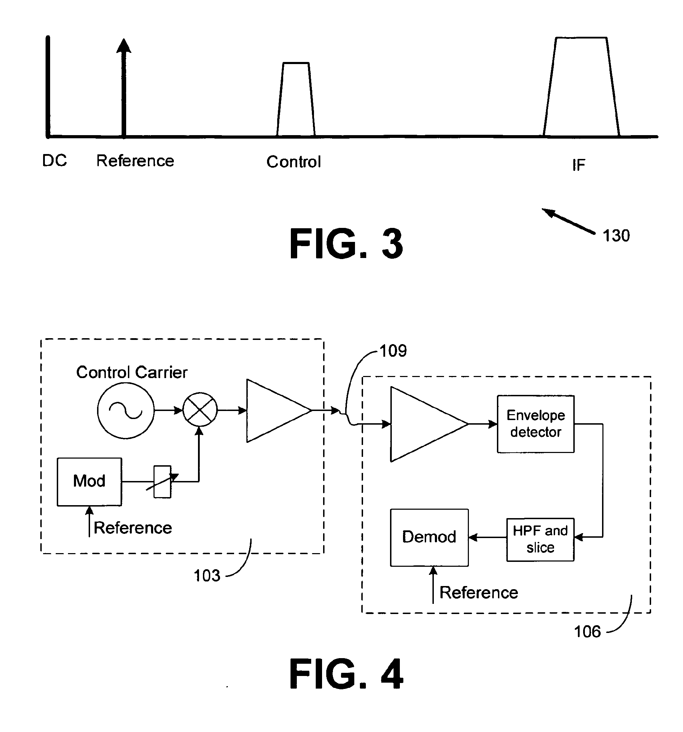

FIG. 3 is a diagram illustrating one example of a multiplexed signal 130 present on the shielded coaxial cable of the interface 109 according to one embodiment. The multiplexed signal 130 may include, for example, a direct current (DC) component, a clock reference signal, a control signal, and an IF signal. The DC component may be used to power the RF modules 106 without additional power supply connections. The frequency of the IF signal may be chosen based at least in part on the properties of the coaxial interface 109. For example, commonly available shielded coaxial cable may have an acceptable signal loss around 8 GHz, but the signal may drop off precipitously after around 8 GHz. Also, it may be the case that test equipment is more expensive beyond around 8 GHz. Accordingly, a frequency near 8 GHz may be chosen as the IF frequency.

The phase-locked loop (PLL) reference may be sent from the baseband module 103 to be used as the bit clock for the interface 109. In one embodiment, the clock reference signal is 270 MHz, the control signal is 2.64 GHz, and the IF signal is 8.64 GHz. In other embodiments, the control signal may be selected as a multiple of the reference signal, and the IF signal may be selected as a multiple of the control signal. As a non-limiting example, the clock reference signal may be 270 MHz, the control signal may be 2.7 GHz (10 times 270 MHz), and the IF signal may be 8.1 GHz (3 times 2.7 GHz). In one embodiment, the control channel carrier frequency is 0 Hz. In some cases, the control channel carrier frequency may be selected so as not to interfere with either the IF or the RF frequencies. By selecting the frequencies according to harmonic relationships, interference among the signals may be minimized.

FIG. 4 is a block diagram illustrating components of the baseband module 103 and the RF module 106 used in modulating and demodulating the control signal of the multiplexed signal 130 (FIG. 3) according to one embodiment. In the baseband module 103, a modulation stage generates a modulated control signal based at least in part on an internally generated PLL clock reference. Amplitude-shift keying (ASK) modulation may be used to modulate the carrier. A modulation depth of 100% corresponding to on/off keying may be employed. Alternatively, programmable modulation depth may be employed to accommodate issues resulting due to a very large change in signal, such as that resulting from voltage-controlled oscillator (VCO) pulling and other causes.

A variable resistor may control the output signal level of the modulation stage, which is then provided to a mixer. A carrier signal from a local oscillator is then mixed with the modulated signal, thereby shifting the modulated signal to the desired control RF range. The resulting signal may be amplified and sent over the coaxial interface 109 to the RF module 106.

In the RF module 106, the control signal is amplified and processed by an envelope detector. The signal is then processed by a high pass filter and slicer, and then provided to a demodulation stage. The demodulation stage uses the clock reference from the interface 109 to demodulate the received control signal.

Several exemplary embodiments for modulation in the RF module 106 will next be discussed. In a first embodiment, ASK modulation may be employed. The RF module 106 may generate a carrier suitable for the control signal for other uses and may thus use minimal circuitry to generate its own modulated carrier. The RF module 106 may then employ the same modulation and line coding as for the baseband module 103. The RF module 106 may, for example, employ a controllable modulation index with a maximum of 100%. The read-back function for the RF module 106 may not have timing critical restraints in some cases. Therefore, the data rate for read-back may be significantly reduced. In one non-limiting example, the read-back data rate from the RF module 106 may be 67.5 MHz, which corresponds to a 270 MHz reference signal divided by four.

If the RF module 106 does not include a control carrier source, the RF voltage control oscillator may be divided down to generate a source close in frequency to the control carrier. With amplitude modulation being employed, carrier frequency synchronization may not be required. With such an approach, there may be a need to enable the RF PLL at an appropriate frequency before read-back may be performed.

In a second embodiment, carrier offset modulation may be employed. In this embodiment, it may be assumed that the RF module 106 does not otherwise include a local carrier source, and the cost for generating such a carrier may be significant. The RF module 106 may generate an offset double sideband carrier by mixing the carrier from the baseband module 103 with the clock reference to generate carriers at the control RF carrier signal (e.g., 2700 MHz) plus or minus the clock reference signal (e.g., plus or minus 270 MHz). The generated carrier can then be ASK modulated as described in connection with the baseband module 103.

In a third embodiment, carrier offset load modulation may be employed. In this embodiment, it may be assumed that the RF module 106 does not otherwise include a local control carrier source, and the cost for generating such a carrier may be significant. Here, the modulated signal could be, for example, a 270 MHz Manchester coded signal or a double sideband suppressed carrier signal with carrier at plus or minus 270 MHz modulated by data at a fraction of the 270 MHz rate. The composite signal may then be load modulated back to the baseband module 103. This modulation process may be similar to the modulation employed in the 13 MHz RFID and near field communication (NFC) standards of modulation.

It is noted that the load modulation process may be a tuned operation such that the modulation process does not affect the main IF signal or the reference signal. If the main IF signal could be affected, then read-back may be limited to occur during silent periods when the main IF carrier is off and the clock reference quality is not critical.

Due to delays associated with the transmit and receive paths of the control interface, there may be a delay between the clock reference and the transmitted and received symbols synchronized to the clock. The circuitry employed may be configured to minimize this delay or to include delay compensation circuitry within the receivers such that the received bits are sampled correctly. Various clock and data recovery (CDR) techniques may be employed, including PLL, self-correcting phase detectors, transport delay calibration, and/or other techniques.

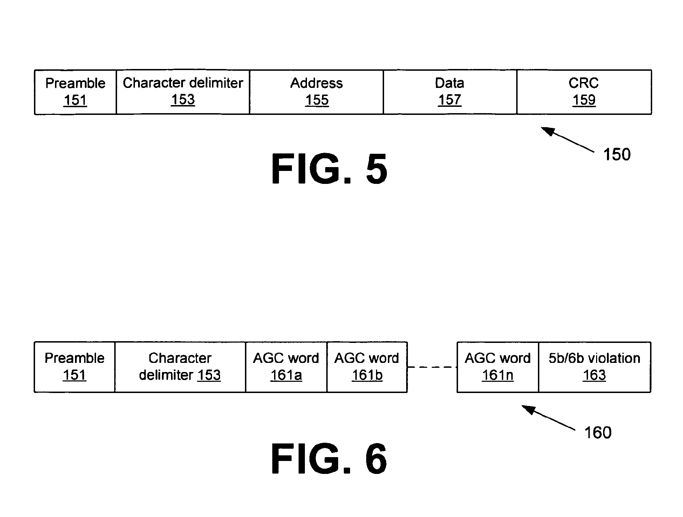

Moving on to FIG. 5, shown is one example of a packet format 150 employed for control data traffic on the forward link. The packet format 150 includes a preamble field 151, a character delimiter field 153, an address field 155, a data field 157, a cyclic redundancy check (CRC) field 159, and potentially other data. The preamble field 151 may contain, for example, alternating 1s and 0s to provide a direct current (DC) free signal for DC removal before the character delimiter field 153. In one embodiment, the last bit of the preamble field 153 is the inverse of the first bit of the character delimiter field 153. The character delimiter field 153 is a predetermined bit sequence that marks the start of a byte stream. If multiple RF modules 106 are coupled to the interface 109, special character delimiters may be used for selection of RF modules 106.

The address field 155 may contain one or more bytes that indicate a memory mapped address being written or read. The data field 157 may include multiple bytes of written data. In a read operation, the data field 157 may be omitted. For a basic write command, the number of bytes may be fixed at a predetermined number. The CRC field 159 includes a standard CRC covering the address field 155 and the data field 157. In one embodiment, the CRC is a 16 bit CRC.

To simplify the design of the receiver, the sections of the transmitted packet format 150 other than the preamble field 151 may be coded using an 8b/10b code or another coding technique. The character delimiter field 153 may be coded using, for example, K28.5 or K28.1 with two options (running disparity (RD)=-1 or RD=+1) for an RF module selection from up to four RF modules 106. These two special characters within the 8b/10b code set may be chosen because they have a unique run of five bits of the same sign that cannot be found in other combinations of coded words, as long as the K28.7 special character is also not used. In this special usage of control words as a character delimiter as well as an RF module selection, other control codes could be used. This is because the bits prior to the character delimiter will be "01" or "10" in this example.

The probability of a bit error may be rare on the robust forward link. Accordingly, the baseband module 103 may be configured to verify the integrity of a block of multiple write transactions by performing a single read operation. In one embodiment, the RF module 106 includes a counter that tracks the number of write transaction received, and a counter that tracks the number of write transactions received with a CRC error or other error. The baseband module 103 may read these counters to determine whether all write transactions were received by the RF module 106 and to determine whether any of the transactions resulted in an error. A read to the counters, which may correspond to a single read to a register, may set the counters back to zero.

The same packet format 150 may be employed for the reverse data link. To support multiple RF modules 106 on the same interface 109, the character delimiter field 153 may be coded using, for example, K28.5 or K28.1 with two options (running disparity (RD)=-1 or RD=+1) for an RF module selection. In one embodiment, the assignment of character delimiter values may be via selector pins on the chip package of the RF module 106.

Referring next to FIG. 6, shown is one example of a streaming format 160 that may be employed for automatic gain control (AGC) data traffic on the forward link. For AGC traffic, a predetermined maximum transaction time may be employed. For example, 64 symbols or half of the G128 in the short training field (STF) may be adequate. To comply with the predetermined maximum transaction time, a shortened packet format or a continuous stream of AGC data may be employed to relay AGC data.

A streaming packet format 160 is proposed, where the RF module 106 is configured for an AGC mode based upon a packet being received to set the RF module 106 into receive mode. Any follow on transaction from setting the receive mode may be in a stream mode. In the stream mode, the next character delimiter field 153 received by the RF module 106 indicates the start of the stream.

From the end of the character delimiter field 153, the data received corresponds to codes, for example, in 5b/6b format, which is a subset of the 8b/10b coding. The data corresponds to a plurality of AGC words 161 a, 161 b ... 161 N. The end of the stream may be indicated, for example, by a series of at least six zeros or six ones, which is a 5b/6b coding violation 163. Each AGC word 161 may be coded, for example, as an absolute pointer into a look-up table of the RF module 106 or as a relative step within the look-up table of the RF module 106. Such coding of the AGC words 161 may depend on the size of the look-up table.

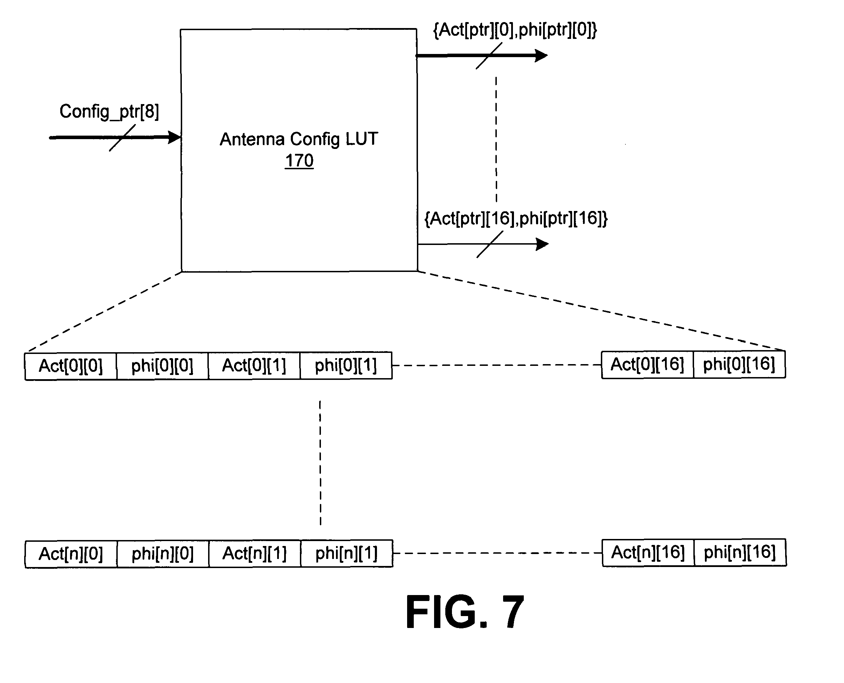

With reference to FIG. 7, shown is one example configuration of an antenna configuration look-up table 170 employed to configure the antenna array 112 of the RF module 106. The WiGig specification, for example, defines a maximum of 64 beam configurations for sector-level sweep and beam refinement. To allow flexibility in implementation, the antenna configuration look-up table 170 may include sections for beam selection configurations (e.g., 16 configurations), connection-oriented configurations, pseudo-omni configurations, and potentially other configurations. In one embodiment, an eight-bit pointer is assigned for antenna configuration, assuming fewer than 256 configurations.

In one embodiment, the RF module 106 has 17 antenna paths, which are shared between transmission and reception. A phase setting (corresponding to "phi" in FIG. 7) and a single-bit antenna selection setting (corresponding to "Act" in FIG. 7) may be assigned. The antenna selection bit may indicate whether a given antenna will be active or disabled for the given configuration. In normal operation, a single register write to the RF module 106 may configure the antenna configuration to be used, the selection of TX or RX mode, the transmitter gain setting, and/or other configuration settings.

In normal packet operation, the baseband module 103 will be measuring the received signal strength during packet reception prior to STF acquisition. The total gain that is controllable is a combination of gain stages in the baseband module 103 as well as the RF module 106 gain. Based on the desired gain setting, the baseband module 103 may have to send a gain setting message to the RF module 106. The gain setting message is configured to be relatively short such that, for example, 1/3 of the 128 symbol long Golay codes used in the STF are used for the gain change transaction. This translates into a maximum of 25 ns for the gain change transaction.

During normal operation, it may be assumed that after a SIFS or DIFS period, the RF module 106 is to be configured to either transmit or receive. The control interface may be configured such that the TX/RX configuration can be chosen, the antenna configuration can be selected, and the transmit gain can be specified all in a single transaction. The antenna configurations in use for both normal operation and beam refinement protocol are stored within the antenna configuration look-up table 170. Therefore, only the pointer for the look-up table needs to be sent.

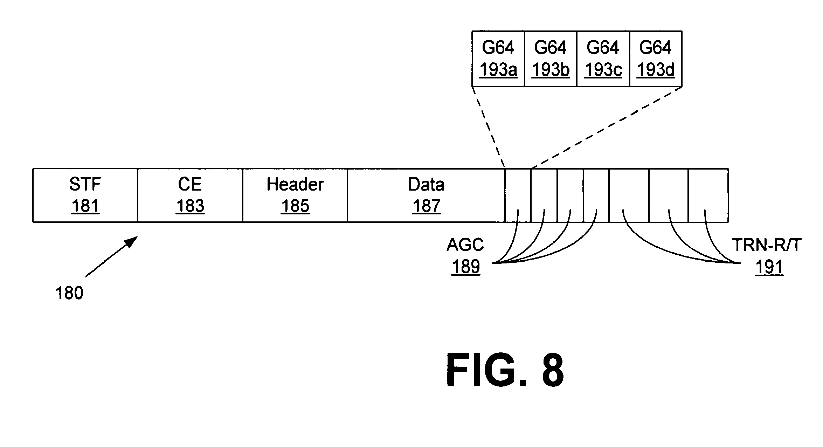

Moving on to FIG. 8, shown is one example of a beam refinement packet format 180 that may be employed during a beam refinement operation. The beam refinement packet format 180 may include a short training field (STF) 181, a channel estimation field (CEF) 183, a header field 185, a data field 187, a plurality of AGC fields 189, a plurality of training period-receive/transmit (TRN-R/T) fields 191, and potentially other data. During the beam refinement operation, a set of AGC fields 189 within the beam refinement section of the packet are intended to be used by the receiver to determine the best gain control setting for each antenna configuration used in the beam refinement operation. Each of the AGC fields 189 may include, for example, four 64-bit Golay codes 193a, 193b, 193c, and 193d.

Two exemplary approaches may be employed during the AGC sequence. In the first approach, the optimum gain for each antenna configuration may be determined. In this case, the gain is adjusted dynamically for each antenna configuration. The gain setting is stored to be reused during the TRN-R/T fields 191. In the second approach, the gain required to receive the antenna configuration with the maximum signal power is determined. In this case, the gain is reduced if any part of the AGC fields 189 goes beyond the desired setting.

The AGC algorithm may be changed from the normal packet reception mode, where, for example, a maximum of three gain steps are employed within the RF module 106. This is possible because in the TRN-R/T fields 191, 128 bit Golay signals may be received and a processing gain of 21 dB allows for a much lower signal-to-noise ratio at the input to the Golay correlator. Due to uncertainty across the IF interface, it may be assumed that for every section of the AGC field 189 or TRN-R/T field 191 transmitted, an initial number of bits (e.g., 64 bits or some other number) may be corrupted due to the transmission process. Therefore, for the AGC fields 189, if the first approach described is employed, the first 64-bit Golay code 193a of every AGC field 189 could be corrupted. In the case of the TRN-R/T fields 191, five 128-bit Golay codes may be transmitted. The latter four may be used for channel estimation. Alternatively, the middle three 128-bit Golay codes may be used for channel estimation.

During the receive beam refinement procedure, both antenna configuration changes and AGC changes may be occurring in a very tight sequence. This may place stringent timing and packet structure configuration requirements on this operation. This is amplified with the AGC fields 189, where it may be expected that the antenna configuration take less than one 64-bit Golay code 193 signal period. This is equivalent to less than ten bits of data at a 270 MHz clock rate. This operation may be under finite state machine (FSM) control, which may be programmed and triggered over the control channel.

It may be assumed that calibration timing will not be as critical as in other cases. It may be that no special calibration functionality is included in the interface. Therefore, the use of basic register read/write operations can be used for calibration purposes.

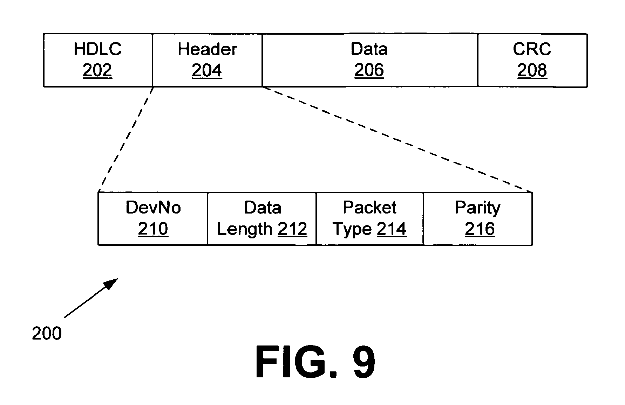

Referring next to FIG. 9, shown is an example of a general packet format 200 that may be employed for the control channel of the interface 109. The packet format 200 includes a high-level data-link control (HDLC) field 202, a header field 204, a data field 206, and a CRC field 208. In one non-limiting example, the HDLC field 202 is 7 bits, the header field 204 is 12 bits, and the CRC field is 10 bits. In one embodiment, the HDLC field 202 may include a delimiter that includes six or some other number of consecutive ones, followed by a zero. Other patterns may be employed in other embodiments. An encoder may be used in the transceiver 100 to ensure that this pattern does not occur, except for the beginning of a packet or on a packet abort. This allows for operations of lower importance to be interrupted when operations of higher importance arise.

The header field 204 may include several subfields such as, for example, a device number field 210, a data length field 212, a packet type field 214, a parity field 216, and/or other fields. In one non-limiting example, the device number field 210 is 3 bits, the data length field 212 is 4 bits, the packet type field 214 is 3 bits, and the parity field 216 is 2 bits. The device number field 210 may include, for example, a device number for an RF module 106 or a broadcast delimiter for programming some or all RF modules 106 concurrently. The data length field 212 provides a data length which may be used to allow for multiple consecutive register reads or writes. The packet type field 214 may be used to indicate different packet types specified for different operations including, for example, register read/write access, streaming AGC mode, low-latency write, and/or other operations. The parity field 216 may provide protection for the header bits.

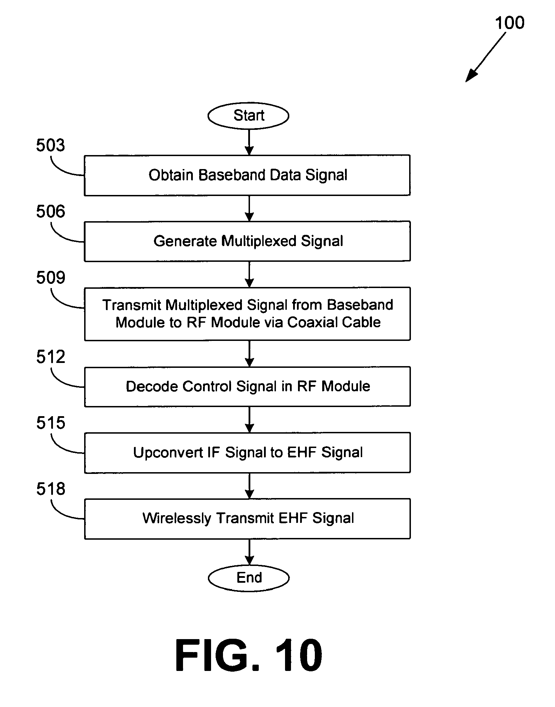

Referring next to FIG. 10, shown is a flowchart that provides one example of the operation of a portion of the transceiver 100 according to various embodiments. It is understood that the flowchart of FIG. 10 provides merely an example of the many different types of functional arrangements that may be employed to implement the operation of the portion of the transceiver 100 as described herein.

Beginning with box 503, the transceiver 100 obtains a baseband data signal. In box 506, the transceiver 100 generates a multiplexed signal in a baseband module 103 (FIG. 1). The multiplexed signal may include, for example, a direct current component, a clock reference signal at a clock reference frequency, a control signal at a control carrier frequency, an intermediate frequency data signal. The direct current component may be used for powering the radio-frequency module 106 (FIG. 1). The control signal may encode one or more commands for controlling the operation of the radio-frequency module 106. The intermediate frequency data signal corresponds to the data signal at an intermediate frequency.
In box 509, the transceiver 100 transmits the multiplexed signal from the baseband module 103 to the radio-frequency module 106 via a single shielded coaxial cable. In box 512, the transceiver 100 decodes the control signal in the radio-frequency module 106. In so doing, the transceiver 100 recovers one or more commands to control the operation of the radio-frequency module 106. The commands may adjust an automatic gain control setting, select one or more antennas in an antenna array 112, select one or more of multiple radio-frequency modules 106 to be active, and perform other functions. For example, a command may trigger an autonomous finite state machine in the radio-frequency module 106 to adjust an automatic gain control setting.

In box 515, the transceiver 100 upconverts the intermediate frequency signal to an extremely high frequency signal in the radio-frequency module 106. In box 518, the transceiver 100 wirelessly transmits the extremely high frequency signal via an antenna array 112 (FIG. 1) collocated in the radio-frequency module 106. Thereafter, the operation of the portion of the transceiver 100 ends.

In a receive operation, the transceiver 100 may perform some of the operations of FIG. 10 in reverse. That is to say, the RF module 106 may receive an extremely high frequency data signal and then downconvert it to an intermediate frequency. The downconverted data signal may be transmitted on the same coaxial cable to the baseband module 103. In addition, parameters stored by the RF module 106 may be read back via the control signal by the baseband module 103.

The various systems described herein may be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, or other components, etc. Such technologies are generally well known by those skilled in the art and, consequently, are not described in detail herein.

The flowchart of FIG. 10 shows the functionality and operation of an implementation of portions of the transceiver 100. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor in a computer system or other system. The machine code may be converted from the source code, etc. If embodied in hardware, each block may represent a circuit or a number of interconnected circuits to implement the specified logical function(s).

Although the flowchart of FIG. 10 shows a specific order of execution, it is understood that the order of execution may differ from that which is depicted. For example, the order of execution of two or more blocks may be scrambled relative to the order shown. Also, two or more blocks shown in succession in FIG. 10 may be executed concurrently or with partial concurrence. Further, in some embodiments, one or more of the blocks shown in FIG. 10 may be skipped or omitted. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present disclosure.

Also, any logic or application described herein that comprises software or code can be embodied in any non-transitory computer-readable medium for use by or in connection with an instruction execution system such as, for example, a processor in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system.

The computer-readable medium can comprise any one of many physical media such as, for example, magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.
Therefore, at least the following is claimed:

## Claims

1. A transceiver, comprising:
a baseband module configured to transmit a data signal;
a radio-frequency module configured to transmit the data signal at an extremely high frequency; and
wherein the baseband module is coupled to the radio-frequency module by way of a coaxial cable, the baseband module is configured to transmit a multiplexed signal to the radio-frequency module through the coaxial cable, and the multiplexed signal includes a control signal modulated onto a control carrier frequency and the data signal modulated onto an intermediate frequency.

2. The transceiver of claim 1, wherein the radio-frequency module is further configured to:
receive another data signal at the extremely high frequency;
downconvert the other data signal to the intermediate frequency; and
transmit the other data signal at the intermediate frequency to the baseband module through the coaxial cable.

3. The transceiver of claim 1, wherein the baseband module and the radio frequency module each correspond to separate integrated circuits.

4. The transceiver of claim 1, wherein the extremely high frequency corresponds to 60 gigahertz.

5. The transceiver of claim 1, wherein the transceiver includes a plurality of the radio-frequency modules, and the control signal encodes a command to select at least one of the radio-frequency modules.

6. The transceiver of claim 1, wherein the radio-frequency modules are configured to tap off of the coaxial cable.

7. The transceiver of claim 1, wherein a first one of the radio-frequency modules is coupled to the baseband module by way of the coaxial cable, a second one of the radio-frequency modules is coupled to the first one of the radio-frequency modules by way of another coaxial cable, and the first one of the radio-frequency modules is configured to couple the coaxial cable to the other coaxial cable.

8. The transceiver of claim 1, wherein the radio-frequency module includes an antenna array having at least one antenna.

9. The transceiver of claim 8, wherein the antenna array includes a plurality of antennas, and the control signal encodes a command to select at least one of the antennas.

10. The transceiver of claim 1, wherein the baseband module and the radio-frequency module are unconnected other than by way of the coaxial cable.

11. The transceiver of claim 1, wherein the multiplexed signal includes a direct current component, and the radio-frequency module is powered by the direct current component.

12. The transceiver of claim 1, wherein the multiplexed signal includes a clock reference signal at a clock frequency, and the radio-frequency module is configured to use the clock reference signal to demodulate the control signal.

13. The transceiver of claim 12, wherein the control carrier frequency is derived from the clock frequency.

14. A receiver, comprising:
means for receiving a data signal at an extremely high frequency, the means for receiving further comprising:
means for downconverting the data signal to an intermediate frequency; and
means for transmitting the data signal through a coaxial cable at the intermediate frequency;
means for controlling the means for receiving by way of a control signal multiplexed through the coaxial cable at a control carrier frequency; and
means for decoding the data signal at the intermediate frequency to a baseband signal.

15. A method, comprising the steps of:
obtaining a baseband data signal in a baseband module;
generating a multiplexed signal in the baseband module, the multiplexed signal including a clock reference signal, a control signal, and an intermediate frequency data signal, the intermediate frequency data signal being generated from the baseband data signal;
transmitting the multiplexed signal to at least one radio-frequency module through a shielded coaxial cable;
decoding the control signal in the at least one radio-frequency module to recover at least one command to control the operation of the at least one radio-frequency module;
upconverting the intermediate frequency data signal to an extremely high frequency data signal in the at least one radio-frequency module; and
wirelessly transmitting the extremely high frequency data signal through an antenna array collocated in the at least one radio-frequency module.
